**Europäisches Patentamt**

(19) **European Patent Office**

**Office européen des brevets**

(11) Numéro de publication: **0 048 677**
**B1**

(12) # FASCICULE DE BREVET EUROPEEN

(45) Date de publication du fascicule du brevet:
**29.08.84**

(51) Int. Cl.³: **B 23 P 21/00**, B 23 Q 39/02

(21) Numéro de dépôt: **81440007.3**

(22) Date de dépôt: **09.02.81**

(54) Poste de travail universel du type à plateau et à plaques de travail interchangeables.

(30) Priorité: **28.08.80 FR 8018887**

(43) Date de publication de la demande:
**31.03.82 Bulletin 82/13**

(45) Mention de la délivrance du brevet:
**29.08.84 Bulletin 84/35**

(84) Etats contractants désignés:
**BE CH DE GB LI NL SE**

(56) Documents cités:
**CH - A - 554 726**
**DE - A - 2 845 913**
**FR - A - 2 465 556**
**US - A - 1 642 771**

(73) Titulaire: **Société Roland BAILLY Assemblages, 5, rue Bernard Palissy ZI Trepillot, F-25000 Besançon (FR)**

(72) Inventeur: **Bonvalot, Pierre, Rue du Côteau, Pirey F-25480 Miserey (FR)**

(74) Mandataire: **Metz, Paul, Cabinet METZ PATNI 95, rue de la Ganzau, F-67100 Strasbourg (FR)**

## Description

L'invention concerne un poste de travail universel à plaques de travail interchangeables. Ce poste comporte des mécanisme de bridage ou de débridage rapides permettant le changement des plaques en une durée minimale.

Les opérations d'assemblages s'effectuent sur des unités mécanisées comprenant une ossature inférieure servant de support à une table de travail. Entre les pieds de l'ossature inférieure est disposé un repose-pieds pourvu d'une pédale de commande. Cette même ossature sert de support à des éléments moteurs entrainant un plateau en rotation continue ou »pas à pas«.

Le centre de la table de travail est traversé par un axe sur lequel peut pivoter une tourelle pourvue de chargeurs. Dans ces chargeurs sont disposées les différentes pièces composant le produit à assembler.

Le poste de travail comporte également un portique fixé par un moyen quelconque au-dessus de la table de travail. Ce portique sert de support à des outils portatifs tels, par exemple, des tournevis pneumatiques.

Le plateau tournant sert de support à des plaques de travail sur lesquelles on assemble le produit ou une partie de celui-ci.

En raison du nombre variable de composants sur des produits différents, il devient nécessaire soit de modifier le nombre de plaques de travail, soit de prévoir des plaques de travail de surface plus grande ou plus petite.

Pour réaliser la solidarisation temporaire des plaques de travail au plateau, les unités mécanisées comportant des moyens tels qu'il faut prévoir des plateaux différents en fonction du nombre de plaques de travail et de leurs dimensions.

La nécessité de modifier le nombre et la surface des plaques pour chaque type d'assemblage entraîne le besoin d'un moyen de solidarisation et de désolidarisation qui permette d'effectuer le changement des plaques en une durée minimale.

Par ailleurs, l'éxécution rapide et correcte de l'assemblage réclame une mise en place précise et rapide de la plaque appropriée devant l'exécutant ou sous une tête de travail annexe, telle une potence de sertissage par exemple.

En effet, la nécessité d'effectuer plusieurs manoeuvres pour obtenir le positionnement correct indisposerait l'exécutant et occasionnerait une perte de temps appréciable.

Par ailleurs, dans les plateaux connus, le nombre de positions est déterminé au départ. Il s'agit même d'une des caractéristiques importantes de construction de ce type de poste de travail.

Ainsi, le brevet suisse n° 554 726 déposé le 14 septembre 1972 par la société ISM se rapporte à une table-transfert rotative comprenant un disque transporteur ou une couronne circulaire portant des plaques de travail indexées individuellement à l'extérieur du disque. L'ensemble d'indexation comporte une plaque-support qui guide au moins deux goupilles d'indexation pouvant monter ou descendre le long de leur axe pour traverser la plaquesupport et las plaque de travail.

On assure ainsi une mise en plase individuelle et précise de chaque de travail sur la plaque de guidage indépendamment de toute contrainte de la couronne. A titre additionnel, les plaques sont montées flottantes sur le disque pour compenser les erreurs de l'entraînement pas à pas. Dans cette table-transfert, les plaques s'avèrent parfaitement interchangeables mais, comme dans les postes antérieurs, prédeterminées en position et en nombre, en raison des goupilles d'indexation possédant des positions fixes.

La présente invention a pour but de fournir des moyens permettant, d'une part, de positionner très exactement chaque plaque de travail devant l'exécutant ou devant une tête de travail annexe et, d'autre part, des solidarisations et désolidarisations rapides des plaques en vue de leur changement en une durée minimale.

La présente invention a également pour but de s'affranchir de la limitation en nombre de positions imposée par les caractéristiques techniques de construction des postes de travail précédemment connus.

A cet effet, l'invention concerne un poste de travail universel pour l'assemblage de produits complexes à partir de composants situés par exemple dans les chargeurs d'une tourelle centrale comportant en combinaison, un plateau universel équipé de plaques de travail interchangeables coopérant avec des moyens de détection en positions sollicités par les plaques de travail portées par le plateau lui conférant ainsi un nombre de position, ledit poste possédant des moyens de solidarisation et de désolidarisation rapides des plaques au plateau, caractérisé en ce que le plateau universel comporte une rainure dans laquelle viennent s'engager un ou plusieurs mécanismes de solidarisation ou de désolidarisation rapides par plaque, conférant ainsi aux plaques la possibilité d'occuper des positions non prédeterminées et par conséquent la possibilité d'affecter des formes et des surfaces différentes les unes des autres.

Cette invention permet d'obtenir de multiples avantages tels que la possibilité, d'une part, de modifier le nombre de plaques de travail et leurs dimensions et, d'autre part, de juxtaposer des plaques de dimensions différentes pour l'assemblage d'un produit en deux temps.

La détection de position est effectuée par la plaque elle-même, ce qui rend le positionnement entièrement indépendant de la dimension de la plaque et de sa position précédente et permet de réaliser un poste à nombre variable de positions.

L'arrêt du plateau est provoqué automatiquement par la plaque de travail pourvue des moyens de positionnement.

Par ailleurs, ainsi qu'il ressort des considérations ci-dessus, le poste de travail selon l'invention offre une grande universalité d'usage.

Cette universalité d'usage résulte, d'une part, de la présence d'un moyen de détection par plaque et, d'autre part, du mécanisme de bridage des plaques qui permet d'adapter des plaques de dimensions quelconques.

Il n'existe donc pas de positions prédéterminées.

D'autres caractéristiques et avantages de l'invention apparaîtront à la lecture de la description qui suit, effectuée à titre d'exemple non limitatif en référence au dessin accompagnant dans lequel:

La figure 1 est une vue en perspective de l'ensemble du poste de travail mécanisé selon l'invention;

la figure 2 est une vue de détail en coupe de la combinaison du plateau, des moyens de positionnement et des moyens de solidarisation et de désolidarisation;

la figure 3 est une vue schématique de détail illustrant un mode de réalisation avec détecteur en position latérale.

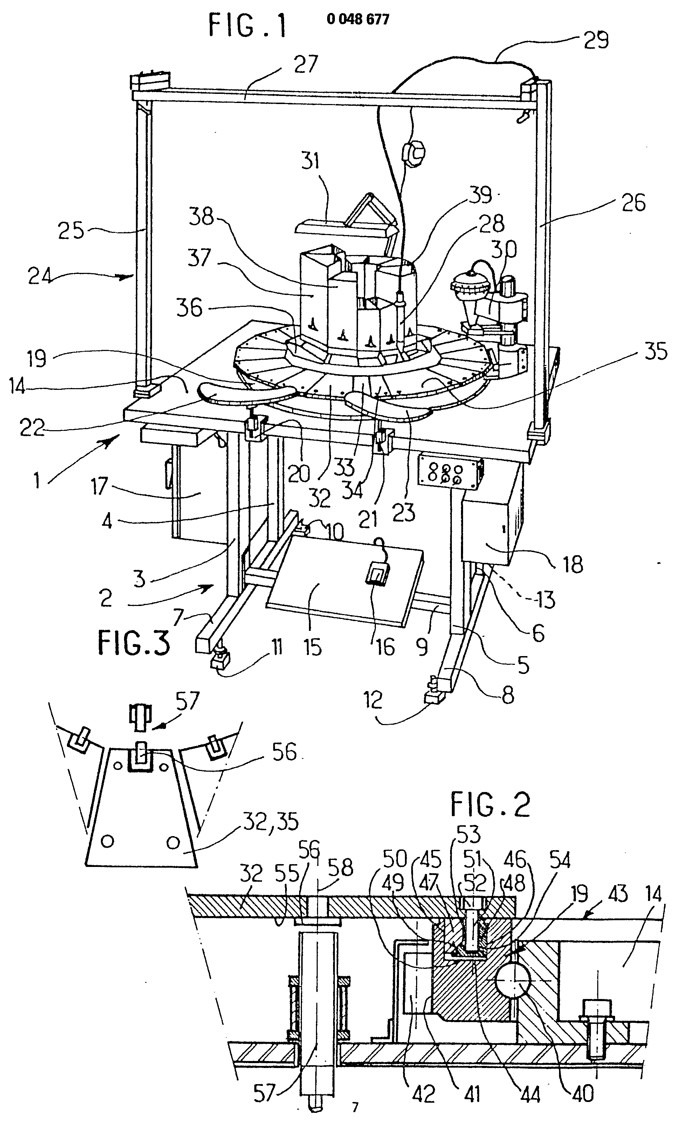

Le poste de travail mécanisé 1, représenté en figure 1, comporte une ossature 2 composée de pieds 3, 4, 5, 6, de longerons 7, 8 et de traverses 9. Les pieds, référencés de 3 à 6, possèdent, à leur extrémités inférieures, des pistons de réglage 10, 11, 12, 13 permettant de mettre à niveau une table de travail 14 reposant sur ladite ossature 2. Sur la traverse 9 est disposé un repose-pieds réglable 15 pourvu d'au moins une pédale de commande 16. L'ossature 2 sert également de support à des réceptacles d'outils 17, 18 et à des éléments de commande assurant la rotation d'un plateau universel 19. On fixe à la table de travail 14, par des éléments de serrage 20, 21, des accoudoirs réglables 22, 23.

De même, on fixe à cette table de travail 14 un portique 24 composé de montants 25, 26 et d'une traverse 27. Ce portique 24 sert de support à au moins un outillage portatif tel qu'un tournevis pneumatique 28 alimenté par une conduite 29 branchée sur un réseau de distribution (non représenté).

On peut également prévoir un poste automatique 30 pour le sertissage, le bouterollage et autres. De même, on peut prévoir un éclairage 31.

Sur le plateau 19 sont fixées des plaques de travail 32, 33, 34, 35.

Selon une caractéristique de l'invention, les plaques de travail 32 à 35 sont interchangeables et différentes.

Il ressort de la figure 1 que les plaques de travail 33, 34 sont nettement plus petites que la plaque 32 alors que la plaque 35 est plus grande que les autres plaques.

Au centre de la table de travail 19 est disposée une tourelle 36 pivotant autour d'un axe d'articulation (non représenté). Cette tourelle 36 sert de support à des chargeurs 37, 38, 39 dans lesquels on dispose les différentes pièces composant le produit à assembler.

On se référera maintenant à la figure 2.

On dispose entre la table de travail fixe 14 et le plateau tournant 19 une couronne à billes 40. La face interne 41 du plateau tournant 19 possède une couronne dentée 42 s'engrenant avec un pignon moteur (non représenté) pour l'entraînement du plateau en rotation. Le plateau comporte en partie supérieure une rainure 44 à parois parallèles 45 et 46 perpendiculaires à la face supérieure 43 du plateau.

Pour chaque plaque de travail 32 à 35, on engage dans cette rainure un ou plusieurs mécanismes de solidarisation ou de désolidarisation rapides opérant par bridage.

Chaque mécanisme se compose de deux éléments de serrage 47 et 48 affectant une section droite en forme de triangle rectangle disposés tête bêche et montés mobiles en coulissement le long des parois de la rainure 44. Les hypoténuses 49 et 50 de ces deux éléments peuvent coulisser l'une par rapport à l'autre. Ce coulissement est provoqué par une vis de serrage 51 dont la tête 52 force la plaque de travail en appui sur la face supérieure 43 du plateau 19. Le corps de vis traverse l'élément supérieur 47 pour venir se visser dans un trou taraudé 54 réalisé dans l'élément inférieur 48. Ce mécanisme de solidarisation et de désolidarisation rapides permet aux plaques de travail 32 à 35 de se déplacer par un simple coulissement sans devoir les soulever. De ce fait, on peut conférer auxdites plaques de travail 32 à 35 une position progressive coulissante sans les contraindre dans une position angulaire prédéterminée.

Pour obtenir un des buts recherchés par l'invention, à savoir un arrêt précis de la rotation du plateau tournant 19, chaque plaque de travail 32 à 35 comporte un plot de détection 56. Ce plot de détection 56, pouvant être logé dans la face inférieure 55 de la plaque 32, coopère avec un détecteur 57 solidaire de la table de travail 14. Avantageusement, ce plot de détection 56 peut être placé dans le plan médian de la plaque de travail 32 à 35 et, ainsi, la détection devient totalement indépendante de la dimension de chaque plaque de travail 32 à 35. Pour un fonctionnement correct, le plot de détection 56 et le détecteur 57 se font face et sont situés dans un même plan 58. De ce fait, on peut soit remplacer l'une ou l'autre ou la totalité des plaques de travail 32 à 35 par d'autres plaques de mêmes dimensions ou de dimensions différentes, soit supprimer l'une l'autre des plaques.

Cette détection de type magnétique peut être remplacée par tout autre moyen équivalent ou toute autre position de l'élément détecteur, par exemple en position transversale comme représenté en figure 3.

On a vu dans la description ci-dessus que les effets techniques de l'invention sont indépendants de la forme du plateau. L'invention garde donc toute sa valeur quel que soit le type de plateau utilisé.

L'invention a été décrite ci-dessus en détail. Diverses modifications mineures, des variantes directes, des substitutions par des équivalents ne changent en rien l'invention telle qu'elle est définie par les revendications. Elles rentrent au contraire pleinement dans son cadre.

## Revendications

1. Poste de travail universel pour l'assemblage de produits complexes à partir de composants situés par exemple dans les chargeurs d'une tourelle centrale comportant en combinaison, un plateau universel équipé de plaques de travail interchangeables coopérant avec des moyens de détection en positions sollicités par les plaques de travail portées par le plateau lui conférant ainsi un nombre de position, ledit poste possédant des moyens de solidarisation et de désolidarisation rapides des plaques au plateau, caractérisé en ce que le plateau universel (19) comporte une rainure (44) dans laquelle viennent s'engager un ou plusieurs mécanismes de solidarisation ou de désolidarisation rapides par plaque, conférant ainsi aux plaques la possibilité d'occuper des positions non prédeterminées et par conséquent la possibilitée d'affecter des formes et des surfaces différentes les unes des autres.

2. Poste de travail selon la revendication 1 caractérisé en ce que la rainure (44) présente des parois parallèles (45) et (46) perpendiculaires à la face supérieure (43) de plateau (19).

3. Poste de travail selon les revendications 1 et 2 caractérisé en ce que les mécanismes de solidarisation et de désolidarisations rapides des plaques sont deux éléments de serrage supérieur (47) et inférieur (48) montés mobiles en coulissement dans la rainure et en serrage le long des parois verticales (45) et (46) de la rainure (44).

4. Poste de travail selon la revendication 3 caractérisé en ce que les éléments supérieur (47) et inférieur (48) présentent une section droite en forme de triangle rectangle dont les hypoténuses respectives (49) et (50) peuvent coulisser l'une par rapport à l'autre, ce mouvement de coulissement résultant de l'action d'une vis de serrage (51) dont la tête (52) force la plaque de travail en appui contre la face supérieure (43) du plateau (19) et dont le corps traverse l'élément supérieur (47) pour venir se visser dans un trou taraudé (54) que présente l'élément inférieur (48).

## Patentansprüche

1. Universeller Arbeitsplatz für den Zusammenbau von Erzeugnissen aus Einzelbestandteilen, die z. B. in den Magazinen eines in der Mitte befindlichen Drehkranzes vorhanden sind, welcher aus einer Kombination von universeller Scheibe und auswechselbaren Arbeitsplatten besteht, die mit einer Positioniereinrichtung kooperiert, welche durch die auf der Scheibe befindlichen Arbeitsplatten ausgelöst wird und der Scheibe auf diese Weise eine Anzahl an Positionen ermöglicht, wobei besagter Arbeitsplatz Möglichkeiten zum raschen Feststellen und Entriegeln der Platten an der Scheibe besitzt, dadurch gekennzeichnet, daß die universelle Scheibe (19) eine Nut (44) aufweist, in welche ein oder mehrere Einrichtungen pro Platte zum raschen Feststellen oder Entriegeln paßt und somit den Platten die Möglichkeit verschafft, nicht vorher bestimmte Positionen einzunehmen und folglich auch verschiedene Formen und Oberflächen anzunehmen.

2. Arbeitsplatz nach Anspruch 1, dadurch gekennzeichnet, daß die Nut (44) parallele Seitenwände (45) und (46) aufweist, die senkrecht zur Oberseite (43) der Scheibe (19) verlaufen.

3. Arbeitsplatz nach Anspruch 1 und 2, dadurch gekennzeichnet, daß die Einrichtung zum raschen Feststellen und Entriegeln der Platten aus einem oberen Element (47) und einem unteren Element (18) besteht, die beweglich angebracht sind, damit man sie in der Nut verschieben und entlang der senkrechten Seitenwände (45) und (46) der Nut (44) feststellen kann.

4. Arbeitsplatz nach Anspruch 3, dadurch gekennzeichnet, daß das obere Element (47) und das untere Element (48) Querschnitte in Form von rechtwinkligen Dreiecken aufweisen, deren jeweilige Hypotenusen (49) bzw. (50) in bezug aufeinander verschiebbar sind, wobei sich die Verschiebebewegung dadurch ergibt, daß der Schraubenkopf (52) einer Feststellschraube (51) die Arbeitsplatte gegen die Oberseite (43) der Scheibe (19) drückt und der Schraubenkörper durch das obere Element (47) hindurchgeht, um in ein Gewindeloch (54), welches das untere Element (48) aufweist, eingedreht zu werden.

## Claims

1. Universal working stand for the assembly of complex products from components located for example in the magazines of a central turret including in combination, a universal platen equipped with exchangeable supporting plates which cooperate with detection means in positions determined by the supporting plates carried by the platen which thus confer on it a position number, the said station having means of rapid fixing and releasing of the plates to the platen, characterised in that the universal platen (19) includes one groove per plate (44) which groove engages one or more rapid engagement or disengagemant mechanismus, thus conferring on the plates the possibility of occupying non-predetermined positions and consequently the possibility of affecting various forms and surfaces of one another.

2. Working stand according to claim 1, characterised in that the groove (44) has parallel walls (45) and (46) which are perpendicular to the upper surface (43) of the platen (19).

3. Working stand according to claims 1 and 2 characterised in that the rapid engagement and disengagement mechanisms for the plates are two upper (47) and lower (48) gripping elements displaceably mounted for sliding within the groove and for gripping along the vertical walls (45) and (46) of the groove (44).

4. Working stand according to claim 3 characterised in that the upper (47) and lower (48) elements have a straight section in the form of a right-angled triangle of which the respective hypotenuse (49) and (50) can slide relative to one another, this sliding movement resulting from the action of a gripping screw (51) of which the head (52) forces the working plate against the upper surface (43) of the platen (19) and of which the body passes through the upper element (47) to screw into a threaded hole (54) of the lower element (48).

FIG.1  0 048 677

FIG.3

FIG.2